# FASCICULE DE BREVET EUROPEEN

(11) **EP 0 552 123 B1**
(45) Date de publication et mention de la délivrance du brevet: **13.09.1995**
(21) Numéro de dépôt: 93470001.4
(22) Date de dépôt: 11.01.1993
(51) Int. Cl.: F16L 37/084

(54) **Joint à emboîtement entre tuyaux et garniture d'étanchéité pour un tel joint**
Rohrsteckverbindung und deren Abdichtung
Pipe sleeve joint and sealing means for such a joint

(30) Priorité: 13.01.1992 FR 9200262
(43) Date de publication de la demande: 21.07.1993
(73) Titulaire: PONT-A-MOUSSON S.A., 54000 Nancy (FR)
(72) Inventeur: Percebois, Alain, F-54700 Blenod les Pont-à-Mousson (FR); Renard, Philippe, F-54500 Vandoeuvre les Nancy (FR); Berraud, Patrick, F-54700 Blenod les Pont-à-Mousson (FR)
(74) Mandataire: Puit, Thierry

(56) Documents cités:
- DE-A- 2 606 643
- DE-A- 2 754 984
- DE-B- 2 226 151
- FR-A- 2 094 972

## Description

La présente invention est relative à un joint à emboîtement entre tuyaux du type comprenant un bout mâle enfoncé dans un emboîtement et une garniture d'étanchéité comprimée radialement entre-eux, la garniture comprenant un corps annulaire en élastomère muni, du côté de l'entrée de l'emboîtement, d'un talon d'ancrage en saillie extérieure logé dans une gorge d'ancrage de l'emboîtement, et une couronne métallique d'accrochage sur le bout mâle, noyée dans l'élastomère.

L'invention s'applique à la pose des canalisations, notamment en fonte ductile, véhiculant des fluides sous pression.

Lors de la mise sous pression des canalisations, le bout mâle tend à reculer. Il est nécessaire de verrouiller les joints pour éviter que, de proche en proche, le cumul des reculs aboutisse à un déboîtement de certains joints.

Pour éviter d'avoir recours à des massifs de retenue coûteux et/ou encombrants, divers agencements de garnitures d'étanchéité incorporant des inserts dentés ont été proposés, comme, par exemple, le montre le FR-A-2 094 972. Cependant, aucun de ceux-ci ne s'est révélé entièrement satisfaisant, car il s'est avéré difficile de satisfaire simultanément à toutes les conditions requises : aptitude à supporter des efforts axiaux élevés, propriétés homogènes sur toute la gamme de diamètres des tuyaux et malgré leur ovalisation, protection contre la corrosion de la zone de verrouillage où les dents des inserts s'accrochent sur le bout mâle, et obtention d'un arc-boutement des inserts dentés ne conduisant pas à un risque de perforation du bout mâle lorsque les efforts de déboîtement sont élevés.

L'invention a pour but de fournir une solution remplissant l'ensemble des conditions ci-dessus d'une manière plus satisfaisante que les solutions existantes.

A cet effet, l'invention a pour objet un joint à emboîtement du type précité, caractérisé en ce qu'il comprend des organes d'appui noyés dans l'élastomère du talon d'ancrage de la garniture d'étanchéité et ayant extérieurement une forme conjuguée de celle de la gorge d'ancrage de l'emboîtement, ces organes d'appui et la couronne d'accrochage présentant des rampes coopérantes à profil au moins à peu près linéaire, inclinées par rapport à l'axe du joint.

Suivant d'autres caractéristiques :
- les organes d'appui et/ou la couronne d'accrochage sont constitués par une série d'inserts en matériau rigide répartis sur le pourtour du joint ;
- dans chaque plan radial où elle existe, la couronne d'accrochage comprend plusieurs dents ;
- les pointes de toutes les dents sont alignées, ou peuvent s'aligner, sur une ligne parallèle à l'axe de l'emboîtement lorsque les rampes coopérantes sont en appui mutuel ;
- la pointe d'au moins une dent intermédiaire ou, en variante, d'au moins une dent extrême, est décalée radialement par rapport aux autres dents ;
- la pente, ou la pente moyenne, des rampes coopérantes est comprise entre environ 20° et environ 40° par rapport à l'axe de l'emboîtement.

L'invention a également pour objet une garniture d'étanchéité à compression radiale et à couronne métallique d'accrochage pour un joint à emboîtement telle que défini ci-dessus.

Des exemples de réalisation de l'invention vont maintenant être décrits en regard des dessins annexés, sur lesquels :
- la Figure 1 est une demi-vue en coupe axiale d'un joint à emboîtement conforme à l'invention avant l'introduction du bout mâle dans l'emboîtement ;
- la Figure 2 est une demi-vue analogue du joint à l'état monté ;
- la Figure 3 représente à plus grande échelle, également en coupe axiale, un détail des Figures 1 et 2 ; et
- les Figures 4 à 7 sont des vues analogues à la Figure 3 mais relatives à plusieurs variantes du joint suivant l'invention.

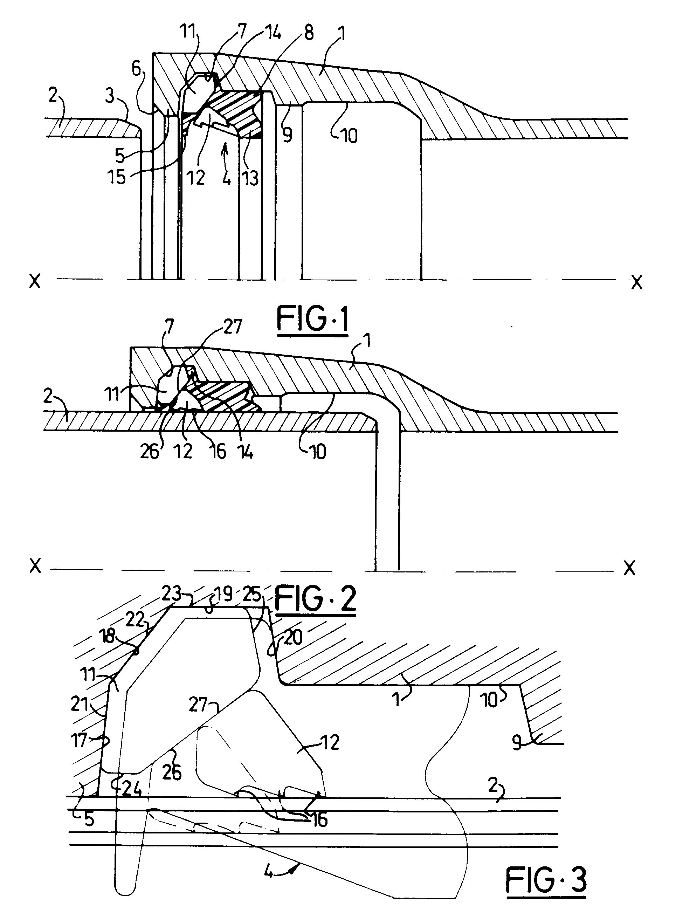

On a représenté à la Figure 1 l'emboîtement 1 d'un premier tuyau et le bout mâle 2, à extrémité extérieurement chanfreinée en 3, d'un second tuyau, ainsi qu'une garniture d'étanchéité 4 à compression radiale et à inserts de verrouillage destinée à réaliser à la fois l'étanchéité et le verrouillage entre les deux tuyaux. Les deux tuyaux peuvent notamment être en fonte ductile.

L'emboîtement 1 comporte une collerette de guidage 5, dont l'entrée est chanfreinée en 6, puis en allant vers le fond de l'emboîtement, une gorge d'ancrage 7, un évidement annulaire 8 de moindre profondeur, une collerette annulaire 9 en légère saillie radiale, et un logement terminal 10.

La garniture 4 est constituée d'une masse d'élastomère surmoulée sur une couronne de paires d'inserts en matériau rigide, notamment métalliques, chaque paire comprenant un insert d'appui 11 et un insert d'accrochage 12 intérieurement denté. La garniture définit un corps avant 13, destiné à être comprimé radialement entre le bout mâle et le fond de l'évidement 8 et, à l'extrémité arrière (c'est-à-dire située du côté de l'entrée de l'emboîtement) de ce corps, un talon extérieur d'ancrage 14 et une lèvre d'étanchéité intérieure 15 servant à éviter l'introduction d'éléments extérieurs agressifs ou corrosifs dans la zone verrouillée. Chaque paire d'inserts 11, 12 est contenue dans un même demi-plan radial de la garniture, et ces paires sont régulièrement réparties sur le pourtour de cette dernière.

Lorsque la garniture est mise en place dans l'emboîtement (Figure 1), la face radialement extérieure du corps 13 s'applique contre la surface périphérique de l'évidement 8, et le talon 14 est reçu dans la gorge 7, en laissant un espace libre radialement à l'extérieur et vers l'arrière. Dans cette situation, de même qu'à l'état libre de la garniture, la lèvre 15 est sensiblement radiale, et les dents des inserts 12 sont en saillie sur la face intérieure du corps 13 et sont sensiblement au contact des inserts 11, lesquels sont situés dans le talon 14 et affleurent la surface extérieure et arrière de l'élastomère. Ce positionnement des inserts 11 dans le talon d'ancrage 14 permet de rigidifier celui-ci et donc de renforcer l'effet d'ancrage dudit talon 14 dans la gorge 7 de l'emboîtement, augmentant en cela le maintien en place de la garniture 4 lors de l'introduction à force du bout mâle ou lors de la mise sous pression de la canalisation.

Le montage du joint s'effectue par simple enfoncement axial du bout mâle dans l'emboîtement. Cette action replie la lèvre 15 vers l'avant, puis repousse radialement les inserts 11 et 12, ces derniers glissant le long des inserts 11, et comprime radialement le corps 13. On aboutit ainsi à la configuration de la Figure 2, où l'extrémité du bout mâle se trouve, avec un large jeu radial, dans l'évidement 10, où les inserts 11 sont bloqués dans la partie extérieure arrière de la gorge 7 et/ou les inserts 12 sont à la fois au contact de ces derniers et, par leurs dents 16, au contact du bout mâle.

On a représenté sur la Figure 3 d'une part le contour de la garniture mise en place dans l'emboîtement, avant l'introduction du bout mâle, et d'autre part la position finale des paires d'inserts lorsqu'un bout mâle de diamètre maximal est en place dans l'emboîtement.

Comme on le voit mieux sur cette Figure 3, la gorge 7 de l'emboîtement présente successivement, à partir de la collerette 5, une paroi 17 à peu près radiale et légèrement inclinée vers l'avant, une paroi 18 nettement plus inclinée, à environ 45°, un fond cylindrique 19, et une paroi avant 20 à peu près radiale et légèrement inclinée vers l'avant. Chaque insert 11 présente : vers l'arrière et à l'extérieur trois surfaces successives 21 à 23 conjuguées respectivement des surfaces 17 à 19 ; une surface intérieure 24 parallèle à l'axe X-X de l'emboîtement, qui est sensiblement l'axe du bout mâle et donc du joint, cette surface 24 se raccordant par un arrondi à l'extrémité intérieure de la surface 21 ; une surface 25 à peu près parallèle à la surface 20 et se raccordant par un arrondi à l'extrémité avant de la surface 23 ; et une rampe plane d'appui 26, dont l'inclinaison, vers le haut et vers le bas, est comprise entre 20 et 40° environ par rapport à l'axe X-X du joint, cette rampe reliant l'extrémité avant de la surface 24 à l'extrémité inférieure de la surface 25, les raccordements s'effectuant par des arrondis.

Chaque insert 12 a une forme grossièrement quadrangulaire, avec une surface extérieure et arrière plane 27 et, à l'opposé de celle-ci, une surface intérieure d'accrochage définissant les trois dents 16 de l'insert. La surface 27 forme une rampe d'appui destinée à coopérer avec la rampe 26 de l'insert 11 associé. Avant l'introduction du bout mâle (Figure 1), la partie extérieure de la surface 27 se trouve en regard de la partie intérieure de la surface 26. Il en est de même lorsque la garniture est au repos.

Au cours de l'introduction du bout mâle 2, la compression radiale de la garniture 4 a pour premier effet la mise en place des inserts 11 dans le coin extérieur arrière de la gorge 7, comme représenté sur les Figures 2 et 3, c'est-à-dire la venue des surfaces 21 à 23 en appui respectif contre les surfaces 17 à 19 de cette gorge. La position de la rampe 26 par rapport à l'emboîtement est ainsi parfaitement déterminée.

De plus, l'introduction du bout mâle a pour effet de faire glisser la surface 27 des inserts 12 vers l'extérieur de long des rampes 26, de sorte que les inserts 12 se déplacent parallèlement à eux-mêmes jusqu'à une position qui dépend du diamètre réel du bout mâle dans le plan radial considéré. On a ainsi illustré à la Figure 3 les positions d'un insert 12 correspondant à un diamètre maximal du bout mâle (en trait plein) et à un diamètre minimal de ce bout mâle (en trait mixte).

En pratique, les positions des inserts 11 et 12 décrites ci-dessus ne sont garanties qu'après la mise en pression de la canalisation.

Les trois dents 16 sont usinées de façon que leurs pointes soient alignées sur une droite qui, lorsque les surfaces 27 et 26 coopèrent, est parallèle à l'axe X-X de l'emboîtement. Ainsi, quel que soit le diamètre du bout mâle, les trois dents attaquent simultanément ce bout mâle, et, lors du recul de celui-ci, la pression de contact est répartie entre elles de façon uniforme.

Grâce à l'indépendance des paires d'inserts 11-12, les joints décrits ci-dessus peuvent accepter des déviations angulaires du bout mâle par rapport à l'emboîtement allant jusqu'à 5° environ.

Il est à noter que quel que soit l'effort de recul s'exerçant sur le bout mâle, la réaction qui se développe sur chaque dent 16 de chaque insert 12 a une orientation déterminée, perpendiculaire à la surface 26, ce qui interdit un pivotement des inserts 12 risquant de perforer le bout mâle.

En pratique, pour des tuyaux en fonte ductile ayant des diamètres courants, l'inclinaison des rampes 26 par rapport à l'axe de l'emboîtement est de préférence choisie entre 20 et 40° environ, comme indiqué plus haut. En effet, en-dessous de 20°, les tolérances diamétrales admises pour le bout mâle sont très faibles, et au-dessus de 40°, les inserts 12 s'accrochent mal sur le bout mâle et, par suite, le verrouillage est peu fiable.

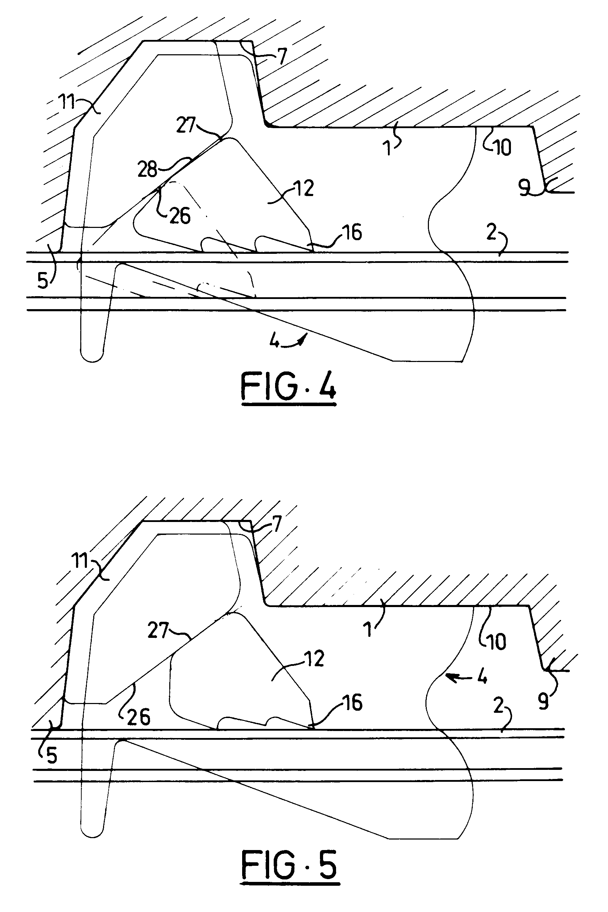

Les Figures 4 à 7 illustrent diverses variantes du joint des Figures 1 à 3.

Dans le cas de la Figure 4, les surfaces 27 sont légèrement bombées, ce qui autorise de plus grandes déviations angulaires du bout mâle, pouvant aller jusqu'à 10° environ. En revanche, les pressions s'exerçant sur les trois dents sont différentes les unes des autres lors du recul du bout mâle, puisque les forces de réaction partent toutes de l'unique point de contact 28 entre les surfaces 26 et 27. Les mêmes remarques s'appliquent à une autre variante, non représentée, où ce sont les surfaces 26 qui sont légèrement bombées.

La variante de la Figure 5 ne diffère de celle de la Figure 3 que par le fait que la dent 16 médiane est en retrait radial par rapport aux deux dents extrêmes. Ceci facilite l'accrochage des inserts 12 sur le bout mâle, car, pour un même effort, les pressions initiales, ne s'exerçant que sur deux dents au lieu de trois, sont plus élevées. Par contre, lorsque le recul du bout mâle est terminé, les pressions s'équilibrent entre les trois dents.

De plus, dans cette variante, pour la même raison, il n'est pas nécessaire d'usiner les dents 16 pour leur donner un angle vif.

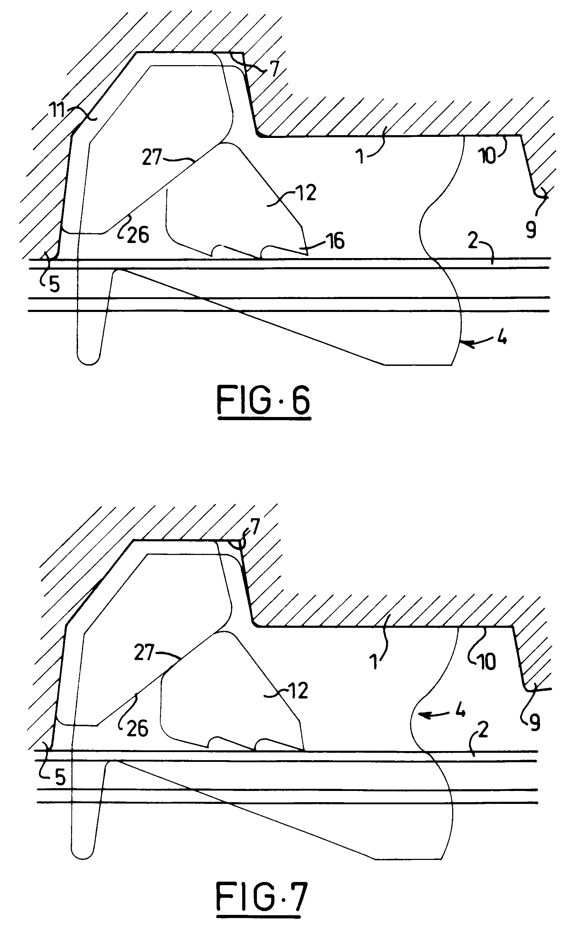

Des remarques analogues peuvent s'appliquer à la variante de la Figure 6, où, au contraire, la dent 16 médiane est radialement saillante par rapport aux deux dents extrêmes, et à celle de la Figure 7, où c'est la dent 16 arrière qui est en retrait radial par rapport aux deux autres. Dans ce dernier cas, en outre, le repli vers l'avant de la lèvre 15 lors de l'introduction du bout mâle risque moins d'interférer avec la dent arrière des inserts.

Dans chaque mode de réalisation, les inserts 11 et/ou 12 peuvent être isolés électriquement pour supprimer tout trajet de conduction électrique entre les deux tuyaux.

## Revendications

1. Joint à emboîtement entre tuyaux, comprenant un bout mâle (2) enfoncé dans un emboîtement (1) et une garniture d'étanchéité (4) comprimée radialement entre eux, la garniture comprenant un corps annulaire (13) en élastomère muni, du côté de l'entrée de l'emboîtement, d'un talon d'ancrage (14) en saillie extérieure logé dans une gorge d'ancrage (7) de l'emboîtement, et une couronne métallique (12) d'accrochage sur le bout mâle, noyée dans l'élastomère, caractérisé en ce qu'il comprend des organes d'appui (11) noyés dans l'élastomère du talon d'ancrage (14) de la garniture d'étanchéité (4) et ayant extérieurement une forme (21, 22, 23) conjuguée de celle (17, 18, 19) de la gorge d'ancrage (7) de l'emboîtement (1), ces organes d'appui (11) et la couronne d'accrochage (12) présentant des rampes coopérantes (26, 27) à profil au moins à peu près linéaire, inclinées par rapport à l'axe (X-X) du joint.

2. Joint à emboîtement suivant la revendication 1, caractérisé en ce que les organes d'appui (11) et/ou la couronne d'accrochage (12) sont constitués par une série d'inserts en matériau rigide répartis sur le pourtour du joint.

3. Joint à emboîtement suivant la revendication 1 ou 2, caractérisé en ce que, dans chaque plan radial où elle existe, la couronne d'accrochage (12) comprend plusieurs dents (16).

4. Joint à emboîtement suivant la revendication 3, caractérisé en ce que les pointes de toutes les dents (16) sont alignées, ou peuvent s'aligner, sur une ligne parallèle à l'axe (X-X) de l'emboîtement lorsque les rampes coopérantes (26, 27) sont en appui mutuel.

5. Joint à emboîtement suivant la revendication 3, caractérisé en ce que la pointe d'au moins une dent (16) intermédiaire est décalée radialement par rapport aux autres dents (16).

6. Joint à emboîtement suivant la revendication 3, caractérisé en ce que la pointe d'au moins une dent (16) extrême est décalée radialement par rapport aux autres dents (16).

7. Joint à emboîtement suivant l'une quelconque des revendications 1 à 6, caractérisé en ce que la pente, ou la pente moyenne, des rampes coopérantes (26, 27) est comprise entre environ 20° et environ 40° par rapport à l'axe (X-X) de l'emboîtement.

8. Garniture d'étanchéité (4) à compression radiale et à couronne métallique d'accrochage (12) pour un joint à emboîtement suivant l'une quelconque des revendications 1 à 7, la garniture comprenant un corps annulaire (13) en élastomère muni d'un talon d'ancrage (14) en saillie extérieure, d'une couronne métallique (12) d'accrochage, noyée dans l'élastomère, et des organes d'appui (11) noyés dans l'élastomère du talon d'ancrage (14) de la garniture d'étanchéité (4), ces organes d'appui (11) et la couronne d'accrochage (12) présentant des rampes coopérantes (26, 27) à profil au moins à peu près linéaire, inclinées par rapport à l'axe (X-X) de la garniture.

## Claims

1. Spigot-and-socket joint between pipes, comprising a spigot (2) pushed into a socket (1) and a seal (4) compressed radially between them, the seal comprising an annular body (13) made of elastomer equipped, on the entry side of the socket, with an outwardly projecting anchoring heel (14) lodged in an anchoring groove (7) in the socket, and, embedded in the elastomer, a metal ring (12) for catching on the spigot, characterized in that it comprises bearing members (11) which are embedded in the elastomer of the anchoring heel (14) of the seal (4) and externally have a shape (21, 22, 23) conjugate with that (17, 18, 19) of the anchoring groove (7) in the socket (1), these bearing members (11) and the catching ring (12) having cooperating ramps (26, 27) which have an at least approximately linear profile and are inclined with respect to the axis (X-X) of the joint.

2. Spigot-and-socket joint according to Claim 1, characterized in that the bearing members (11) and/or the catching ring (12) are constituted by a series of inserts made of rigid material which are distributed on the perimeter of the joint.

3. Spigot-and-socket joint according to Claim 1 or 2, characterized in that, in each radial plane where the catching ring (12) is present, the latter comprises several teeth (16).

4. Spigot-and-socket joint according to Claim 3, characterized in that the tips of all the teeth (16) are aligned, or can be aligned, along a line parallel to the axis X-X of the socket when the cooperating ramps (26, 27) are bearing on each other.

5. Spigot-and-socket joint according to Claim 3, characterized in that the tip of at least one intermediate tooth (16) is radially offset with respect to the other teeth (16).

6. Spigot-and-socket joint according to Claim 3, characterized in that the tip of at least one end tooth (16) is radially offset with respect to the other teeth (16).

7. Spigot-and-socket joint according to any one of Claims 1 to 6, characterized in that the slope, or the average slope, of the cooperating ramps (26, 27) is between approximately 20° and approximately 40° with respect to the axis (X-X) of the socket.

8. Radial-compression seal (4) having a metal catching ring (12) for a spigot-and-socket joint according to any one of Claims 1 to 7, the seal comprising an annular body (13) made of elastomer equipped with an outwardly projecting anchoring heel (14), with a metal catching ring (12) embedded in the elastomer, and with the bearing members (11) embedded in the elastomer of the anchoring heel (14) of the seal (4), these bearing members (11) and the catching ring (12) having cooperating ramps (26, 27) which have an at least approximately linear profile and are inclined with respect to the axis (X-X) of the seal.

## Patentansprüche

1. Rohrsteckverbindung, mit einem männlichen Endstück oder Einsteckende (2), das in eine Aufnahme (1) eingesteckt ist, und einer Dichtungsgarnitur (4), die radial zwischen ihnen komprimiert ist, wobei die Garnitur einen ringförmigen Körper (13) aus Elastomer, der auf der Seite des Eingangs der Aufnahme mit einem Verankerungsabsatz (14) versehen ist, der nach außen vorspringt und in einer Verankerungskerbe (7) der Aufnahme aufgenommen ist, und einen metallischen Anhängkranz (12) auf dem Einsteckende aufweist, das in den Elastomer eingetaucht ist, dadurch gekennzeichnet, daß sie Andrückorgane (11) aufweist, die in den Elastomer des Verankerungsabsatzes (14) der Dichtungsgarnitur (4) eingetaucht sind, und außen eine Form (21, 22, 23) aufweist, die jener (17, 18, 19) der Verankerungskerbe (7) der Aufnahme (1) folgt, wobei diese Andrückorgane (11) und der Verankerungskranz (12) zusammenwirkende Rampen (26, 27) mit einem wenigstens ungefähr linearen Profil aufweisen, die bezüglich der Achse (X-X) der Verbindung geneigt sind.

2. Rohrsteckverbindung nach Anspruch 1, dadurch gekennzeichnet, daß die Andrückorgane (11) und/oder der Verankerungskranz (12) aus einer Reihe von Einsätzen aus starrem Material gebildet sind, die am Umfang der Verbindung verteilt angeordnet sind.

3. Rohrsteckverbindung nach Anspruch 1 oder 2, dadurch gekennzeichnet, daß in einer jeder radialen Ebene, in der sie existiert, der Anhängkranz (12) mehrere Zähne (16) aufweist.

4. Rohrsteckverbindung nach Anspruch 3, dadurch gekennzeichnet, daß die Spitzen aller Zähne (16) auf einer Linie parallel zur Achse (X-X) der Aufnahme ausgerichtet sind, oder ausgerichtet werden können, wenn die zusammenwirkenden Rampen (26, 27) sich in gegenseitigem Andruck befinden.

5. Rohrsteckverbindung nach Anspruch 3, dadurch gekennzeichnet, daß die Spitze wenigstens eines der Mittenzähne (16) radial bezüglich der anderen Zähne (16) versetzt ist.

6. Rohrsteckverbindung nach Anspruch 3, dadurch gekennzeichnet, daß die Spitze wenigstens eines Endzahnes (16) bezüglich der anderen Zähne (16) radial versetzt angeordnet ist.

7. Rohrsteckverbindung nach einem der Ansprüche 1 bis 6, daduch gekennzeichnet, daß die Neigung oder die mittlere Neigung der zusammenwirkenden Rampen (26, 27) zwischen ungefähr 20° und ungefähr 40° bezüglich der Achse (X-X) der Aufnahme beträgt.

8. Dichtungsgarnitur (4) mit radialer Komprimierung und metallischen Anhängkranz (12) für eine Rohrsteckverbindung nach einem der Ansprüche 1 bis 7, wobei die Garnitur einen ringförmigen Körper (13) aus Elastomer aufweist, der mit einem nach außen vorspringenden Verankerungsabsatz (14), einem metallischen Anhängkranz (12), der in dem Elastomer eingetaucht ist, und mit Andrückorganen (11) versehen ist, die in den Elastomer des Verankerungsabsatzes (14) der Dichtungsgarnitur (4) eingetaucht sind, wobei diese Andrück- oder Anlageorgane (11) und der Anhängkranz (12) zusammenwirkende Rampen (26, 27) mit einem wenigstens ungefähr linearem Profil aufweisen, die bezüglich der Achse (X-X) der Garnitur geneigt sind.
